Europäisches Patentamt

European Patent Office

Office européen des brevets

(19)

(11) **EP 1 568 278 A1**

(12) **EUROPEAN PATENT APPLICATION**

(43) Date of publication:
**31.08.2005 Bulletin 2005/35**

(51) Int Cl.⁷: **A01N 59/26**, A01N 57/12
// (A01N59/26, 47:04),
(A01N57/12, 47:04)

(21) Application number: **04356025.9**

(22) Date of filing: **25.02.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Bayer CropScience S.A.**
**69009 Lyon (FR)**

(72) Inventor: **Latorse, Marie-Pascale**
**69490 Saint Romain de Popey (FR)**

(74) Representative: **Mérigeault, Shona**
**Bayer CropScience SA**
**Département Propriété Industrielle**
**B.P. 9163**
**69263 Lyon Cedex 09 (FR)**

(54) **Fungicide composition comprising a phosphorous acid derivative and tolylfluanid or dichlofluanid**

(57)    A fungicide composition comprising a phosphorous acid derivative such as metal phosphites, such as fosetyl-aluminium or fosetyl-sodium, and phosphorous acid itself and its alkali metal or alkaline earth metal salts; and tolylfluanid or dichlofluanid; and fungicide method of treatment.

EP 1 568 278 A1

Printed by Jouve, 75001 PARIS (FR)

**Description**

**Description**

The present invention relates to a fungicide composition intended for protecting crops against fungal diseases, and the corresponding methods of protection by application of the said composition. More precisely, the subject of the present invention is a fungicide composition based on a phosphorous acid derivative and tolylfluanid or dichlofluanid.

Some phosphorous acid derivatives, tolylfluanid or dichlofluanid are known as individual fungicide compounds. However, combinations of such or fungicide compositions combining these compounds have not been reported.

As regards fungicide activity, in particular for the protection of crops, one of the problems at the heart of the research studies carried out in this technical field is the improvement of performances, in particular in terms of fungicide activity and in particular in terms of maintaining this fungicide activity over time.

The present invention provides a fungicide composition which can be used, in particular by the farmer, for controlling the fungi infesting crops and in particular for controlling diseases of grapevine, vegetables, lucerne, soyabean, market garden crops, turf, wood, tree and horticultural plants, for example downy mildew on grapevine.

The fungicide compounds useful for the protection of plants against fungi must be endowed with an ecotoxicity which is reduced to the minimum. As far as possible, they should not be dangerous or toxic to the operator during use. The economic factor should of course not be overlooked in the search for novel fungicide compositions.

Accordingly, the present invention provides a fungicide composition comprising:

A) a phosphorous acid derivative such as metal phosphites, fosetyl-aluminium or fosetyl-sodium, and phosphorous acid itself and its alkali metal or alkaline earth metal salts; and
B) tolylfluanid or dichlofluanid.

The present invention provides in particular a fungicide composition based on a phosphorous acid derivative in combination with tolylfluanid which is a lot more active against fungi which are harmful to plants.

The present invention advantageously provides a fungicide composition which is completely high-performing in particular as regards its efficacy against fungi and the perenniality of this efficacy so as to be able to reduce the doses of chemical products spread in the environment for combating fungal attacks of crops.

The invention provides a fungicide composition capable to be more active and active for longer, and which therefore has a lower dose, but which is also less toxic, in particular in the preventive or curative treatment of fungal diseases, for example, of cereals, Solanaceae, grapevine, vegetables, lucerne, soybean, market garden crops, turf, wood or horticultural plants.

The present invention provides a fungicide composition exhibiting an improved efficacy against Oomycetes, Basidiomycetes and Ascomycetes.

All these objectives or advantages, among others, were achieved by finding a fungicide composition comprising a phosphorous acid derivative and tolylfluanid or dichlofluanid; such a composition surprisingly and unexpectedly exhibiting a very high and perennial anti-fungal efficacy against a broad spectrum of fungi and in particular against those responsible for diseases of grapevines for the control of Oomycetes. Other diseases of grapevines can be controlled with the fungicide composition according to the invention, in particular the control of Ascomycetes or Basidiomycetes.

The fungicide composition according to the invention can also be used for the treatment of bacterial or virus diseases, notably on grapevines.

The chemical name of fosetyl is ethyl hydrogen phosphonate. The chemical name of tolylfluanid is N-dichlorofluoromethylthio-N',N'-dimethyl-N-p-tolylsulfamide. The chemical name of dichlofluanid is N-dichlorofluoromethylthio-N',N'-dimethyl-N-p-phenylsulfamide.

In the fungicide composition according to the invention, compound A is preferably selected from phosphorous acid or fosetyl-Al, most preferably compound A is fosetyl-Al.

As compound B in the fungicide composition according to the invention, tolylfluanid is preferred.

The most preferred fungicide composition according to the invention comprises fosetyl-Al and tolylfluanid.

Phosphorous acid, fosetyl-Al, tolylfluanid and dichlofluanid are known fungicide compounds and can be prepared by methods well known by the person skilled in the art.

From the point of view of weight, it should be specified that in accordance with the invention, the weight ratio (A/B) may be defined as follows, A representing the phosphorous acid derivative and B tolylfluanid: $0.001 \leq A/B \leq 500$; preferably $0.01 \leq A/B \leq 500$; and still more preferably $0.01 \leq A/B \leq 10$.

According to another aspect of the present invention, in the fungicide composition according to the invention, the compound (A)/compound (B) ratio may be advantageously chosen so as to produce a synergistic effect. The term synergistic effect is understood to mean in particular that defined by Colby in an article entitled "Calculation of the synergistic and antagonistic responses of herbicide combinations" Weeds, (1967), *15*, pages 20-22.

The latter article mentions the formula:

$$E = X + Y - \frac{XY}{100}$$

in which E represents the expected percentage of inhibition of the disease for the combination of the two fungicide compounds at defined doses (for example equal to x and y respectively), X is the percentage of inhibition observed for the disease by the compound (A) at a defined dose (equal to x), Y is the percentage of inhibition observed for the disease by the compound (B) at a defined dose (equal to y). When the percentage of inhibition observed for the combination is greater than E, there is a synergistic effect.

The term "synergistic effect" also means the effect defined by application of the Tammes method, "Isoboles, a graphic representation of synergism in pesticides", Netherlands Journal of Plant Pathology, 70(1964), pages 73-80.

The compound (A)/compound (B) ratio ranges indicated above do not in any way limit the scope of the invention, but are, rather, mentioned as a guide, a person skilled in the art being entirely capable of carrying out additional tests to find other values of the ratio of doses of these two compounds, for which a synergistic effect can be observed.

The fungicide composition according to the invention may comprise from 0.00001 to 100%, preferably from 0.001 to 80%, of active compounds, whether these compounds are combined, or whether they are in the form of two active ingredients used separately.

The fungicide composition according to the invention may also comprise one or more other active substances chosen from fungicide, herbicide, insecticide or plant growth regulator active compounds.

Suitable additional active substances include fungicide compounds, in particular chosen in the list consisting of azaconazole; azoxystrobin; (Z)-N-[α-(cyclopropylmethoxyimino)-2,3-difluoro-6-(trifluoromethyl)benzyl]-2-phenylacetamide; benalaxyl; benomyl; benthiavalicarb; biphenyl; bitertanol; blasticidin-S; boscalid; borax; bromuconazole; bupirimate; sec-butylamine; calcium polysulfide; captafol; captan; carbendazim; carboxin; carpropamid; chinomethionat; chlorothalonil; chlozolinate; copper hydroxide; copper octanoate; copper oxychloride; copper sulfate; cuprous oxide; cymoxanil; cyproconazole; cyprodinil; dazomet; debacarb; dichlofluanid; dichlorophen; diclocymet; diclomezine; dicloran; diethofencarb; difenoconazole; difenzoquat metilsulfate; difenzoquat; diflumetorim; dimethirimol; dimethomorph; diniconazole; dinobuton; dinocap; diphenylamine; dithianon; dodemorph; dodemorph acetate; dodine; edifenphos; epoxiconazole; ethaboxam; ethirimol; ethoxyquin; etridiazole; famoxadone; fenamidone; fenarimol; fenbuconazole; fenfuram; fenhexamid; fenpiclonil; fenoxanil; fenpropidin; fenpropimorph; fentin; fentin hydroxide; fentin acetate; ferbam; ferimzone; fluazinam; fludioxonil; fluoroimide; fluoxastrobin; fluquinconazole; flusilazole; flusulfamide; flutolanil; flutriafol; folpet; formaldehyde; fuberidazole; furalaxyl; furametpyr; guazatine; guazatine acetates; hexachlorobenzene; hexaconazole; 8-hydroxyquinoline sulfate; potassium hydroxyquinoline sulfate; hymexazol; cyazofamid; imazalil sulfate; imazalil; imibenconazole; iminoctadine; iminoctadine triacetate; ipconazole; iprobenfos; iprodione; iprovalicarb; isoprothiolane; kasugamycin; kasugamycin hydrochloride hydrate; kresoxim-methyl; mancopper; mancozeb; maneb; mepanipyrim; mepronil; mercuric chloride; mercuric oxide; mercurous chloride; metalaxyl; metalaxyl-M; metam-sodium; metam; metconazole; methasulfocarb; methyl isothiocyanate; metiram; metominostrobin; mildiomycin; myclobutanil; nabam; nickel bis(dimethyldithiocarbamate); nitrothal-isopropyl; nuarimol; octhilinone; ofurace; oleic acid; oxadixyl; oxine-copper; oxpoconazole fumarate; oxycarboxin; pefurazoate; penconazole; pencycuron; pentachlorophenol; sodium pentachlorophenoxide; pentachlorophenyl laurate; phenylmercury acetate; sodium 2-phenylphenoxide; 2-phenylphenol; phthalide; picoxystrobin; piperalin; polyoxins like polyoxin B; polyoxorim; probenazole; prochloraz; procymidone; propamocarb hydrochloride; propamocarb; propiconazole; propineb; prothioconazole; pyrazophos; pyributicarb; pyrifenox; pyrimethanil; pyroquilon; quinoxyfen; quintozene; silthiofam; spiroxamine; sulfur; tar oils; tebuconazole; tecnazene; tetraconazole; thiabendazole; thifluzamide; thiophanate-methyl; thiram; tolclofos-methyl; triadimefon; triadimenol; triazoxide; tricyclazole; tridemorph; trifloxystrobin; triflumizole; triforine; triticonazole; validamycin; vinclozolin; zineb; ziram; zoxamide; phosphorous acid; pyraclostrobin; simeconazole 2,6-dichloro-N-{[3-chloro-5-(trifluoromethyl)-2-pyridinyl]-methyl}-benzamide or dimethyl-[3-(propoxycarbonylamino)propyl]-ammonium O-ethylphosphonate and mixtures thereof.

In addition to these additional active agents, the fungicide composition according to the invention may also comprise any other adjuvants or auxiliary agent useful in plant protection formulations such as, for example, an agriculturally suitable inert carrier and optionally an agriculturally suitable surfactant.

The form of the fungicide composition according to the invention can be selected from of a large number of formulations, such as aerosol dispenser; suspension of capsules; cold fogging concentrate; dustable powder; emulsifiable concentrate; aqueous/aqueous type emulsion; oil/inverse type emulsion; encapsulated granule; fine granule; suspension concentrate for seed treatment; compressed gas; gas generating product; granule; hot fogging concentrate; macrogranule; microgranule; oil-dispersible powder; oil miscible suspension concentrate; oil-miscible liquid; paste;

plant rodlet; powder for dry seed treatment; seeds coated with a pesticide; smoke candle; smoke cartridge; smoke generator; smoke pellet; smoke rodlet; smoke tablet; smoke tin; soluble concentrate; soluble powder; solution for seed treatment; suspension concentrate (= flowable concentrate); ultra low volume liquid; ultra low volume suspension; vapour releasing product; water-dispersible granules or tablets; water dispersible powder for slurry treatment; water-soluble granules or tablets; water-soluble powder for seed treatment; wettable powder.

The fungicide composition of the present invention covers not only the compositions which are ready to be applied to the crop by means of a suitable device, such as a spraying device, but also the commercial concentrated composition which have to be diluted before application to the crop.

The fungicide composition herein described is used in general for application to growing plants, or to sites where crops are grown or intended to grow, or for the coating or film-coating of seeds.

The fungicide composition according to the invention may be applied to the vegetation and in particular to the leaves infested or capable of being infested with the phytopathogenic fungi. Another method of applying the fungicide composition according to the invention is to add a formulation containing the active ingredients to the irrigation water.

For its practical use, the fungicide composition according to the invention can be used alone or in formulations containing one or the other of the active ingredients or alternatively both of them together, in combination or association with one or more other compatible components which are, for example, solid or liquid fillers or diluents, adjuvants, surfactants or equivalents, which are suitable for the desired use and which are acceptable for uses in agriculture. The formulations can be of any type known in the sector which are suitable for application onto all types of cultures or crops. These formulations, which can be prepared in any manner known by the skilled person, also form part of the invention.

The formulations can also contain ingredients of other types, such as protective colloids, adhesives, thickeners, thixotropic agents, penetrating agents, oils for spraying, stabilisers, preserving agents (in particular mould-proofing or biocide agents), sequestering or chelating agents or the like. More generally, the compounds used in the invention can be combined with any solid or liquid additives corresponding to the usual formulation techniques.

The term "filler" means an organic or inorganic, natural or synthetic component with which the active components are combined to facilitate its application, for example, onto the plants, the seeds or the soil. This filler is consequently generally inert and it must be acceptable (for example acceptable for agronomic uses, in particular for treating plants).

The filler can be solid, for example clays, natural or synthetic silicates, silica, resins, waxes, solid fertilizers (for example ammonium salts), natural soil minerals, such as kaolins, clays, talc, lime, quartz, attapulgite, montmorillonite, bentonite or diatomaceous earths, or synthetic minerals, such as silica, alumina or silicates, in particular aluminium or magnesium silicates. The solid fillers which are suitable for granules are as follows: natural, crushed or broken rocks, such as calcite, marble, pumice, sepiolite and dolomite; synthetic granules of inorganic or organic flours; granules of organic material such as sawdust, coconut shell, corn ear or envelope, or tobacco stem; kieselguhr, tricalcium phosphate, powdered cork or adsorbent carbon black; water-soluble polymers, resins, waxes; or solid fertilizers. Such composition can, if so desired, contain one or more compatible agents such as wetting agents, dispersing agents, emulsifiers or colourings which, when they are solid, can also act as diluents.

The fillers can also be liquid, for example: water, alcohols, in particular butanol or glycol, as well as ethers or esters thereof, in particular methyl glycol acetate; ketones, in particular acetone, cyclohexanone, methyl ethyl ketone, methyl isobutyl ketone or isophorone; petroleum fractions such as paraffinic or aromatic hydrocarbons, in particular xylenes or alkylnaphthalenes; mineral or plant oils; aliphatic chlorohydrocarbons, in particular trichloroethane or methylene chloride; aromatic chlorohydrocarbons, in particular chlorobenzenes; water-soluble or highly polar solvents such as dimethylformamide, dimethyl sulphoxide, N,N-dimethyl-acetamide or N-methylpyrrolidone; N-octylpyrrolidone, liquefied gases; or the like, whether they are taken separately or as a mixture.

The surfactant can be an emulsifier, a dispersing agent or a wetting agent, of ionic or nonionic type or a mixture of these surfactants. Among those surfactants there are used, for example, polyacrylic acid salts, lignosulphonic acid salts, phenolsulphonic or naphthalenesulphonic acid salts, polycondensates of ethylene oxide with fatty alcohols or fatty acids or fatty esters or fatty amines, substituted phenols (in particular alkylphenols or arylphenols), ester-salts of sulphosuccinic acid, taurine derivatives (in particular alkyl taurates), phosphoric esters of alcohols or of polycondensates of ethylene oxide with phenols, fatty acid esters with polyols, or sulphate, sulphonate or phosphate functional derivatives of the compounds described above. The presence of at least one surfactant is generally essential when the active ingredients and/or the inert filler are insoluble or only sparingly soluble in water and when the filler for the said composition to be applied is water.

The formulations can also contain other additives such as adhesives or dyes. Adhesives such as carboxymethylcellulose, or natural or synthetic polymers in the form of powders, granules or matrices, such as gum arabic, latex, polyvinylpyrrolidone, polyvinyl alcohol or polyvinyl acetate, natural phospholipids, such as cephalins or lecithins, or synthetic phospholipids can be used in the formulations. It is possible to use colourings such as inorganic pigments, such as, for example: iron oxides, titanium oxides, Prussian blue; organic colouring stuffs, such as those of the alizarin, azo or metal phthalocyanin type; or of trace elements such as iron, manganese, boron, copper, cobalt, molybdenum or zinc salts.

According to another object of the present invention, there is provided a method for controlling the phytopathogenic fungi of crops, characterized in that an agronomically effective and substantially non-phytotoxic quantity of a fungicide composition as herein defined is applied to the soil where plants grow or are capable of growing, to the leaves or the fruit of plants or to the seeds of plants.

The method according to the invention may either be a by a curing, preventing or eradicating method.

In this method, a composition used may be prepared beforehand by mixing the 2 active compounds.

According to a variant of such a method, it is also possible to apply simultaneously, successively or separately compounds (A) and (B) so as to have the conjugated (A) / (B) effect, of compositions each containing one of the two active ingredients (A) or (B).

Advantageously, the quantity of fungicide composition or combination corresponds to a dose of compound (A) and of compound (B) from 10g/ha to 5000 g/ha, preferably from 100g/ha to 3500g/ha, more preferably from 800g/ha to 3000g/ha.

Under specific conditions, for example according to the nature of the phytopathogenic fungus to be treated, a lower dose may offer adequate protection. Certain climatic conditions, resistance or other factors like the nature of the phytopathogenic fungi to be eliminated or the degree of infestation, for example, of the plants with these fungi, may require higher doses of combined active ingredients.

The optimum dose usually depends on several factors, for example on the type of phytopathogenic fungus to be treated, on the type or level of development of the infested plant, on the density of vegetation, or alternatively on the method of application.

Without it being limiting, the crop treated with the fungicide composition or combination according to the invention is, for example, grapevine, but this could be vegetables, lucerne, soybean, market garden crops, turf, wood, tree or horticultural plants.

The phytopathogenic fungi of crops which may be controlled through use of the fungicide composition according to the invention include:

- the group of Oomycetes:

    - of the genus *Phytophthora* such as *Phytophthora phaseoli, Phytophthora citrophthora, Phytophthora capsici, Phytophthora cactorum, Phytophthora palmivora, Phytophthora cinnamoni, Phytophthora megasperma, Phytophthora parasitica, Phytophthora fragariae, Phytophthora cryptogea, Phytophthora porri, Phytophthora nicotianae, Phytophthora infestans* (mildew of Solanaceae, in particular late blight of potato or tomato);
    - of the family of Peronosporaceae, in particular *Plasmopara viticola* (vine downy mildew), *Plasmopara halsfedei* (sunflower mildew), *Pseudoperonospora sp* (in particular cucurbit mildew (*Pseudoperonospora cubensis*) and downy mildew of hops (*Pseudoperonospora humuli*)), *Bremia lactucae* (mildew of lettuce), *Peronospora tabacinae* (downy mildew of tobacco), *Peronospora destructor* (downy mildew of onion), *Peronospora parasitica* (downy mildew of cabbage), *Peronospora farinosa* (downy mildew of chicory and downy mildew of beetroot);

- the group of adelomycetes (ascomycetes):

    - of the genus *Alternaria*, for example *Alternaria solani* (early blight of Solanaceae and in particular of tomato and potato),
    - of the genus *Guignardia,* in particular *Guignardia bidwelli* (black rot of grapevine),
    - of the genus *Venturia,* for example *Venturia inaequalis, Venturia pirina* (apple or pear scabs),
    - of the genus *Oidium,* for example powdery mildew of grapevine (*Uncinula necator*); oidium of leguminous crops, for example *Erysiphe polygoni* (powdery mildew of Cruciferae); *Leveillula taurica, Erysiphe cichoracearum, Sphaerotheca fuligena* (powdery mildew of cucurbits, of composites and of tomato); *Erysiphe communis* (powdery mildew of beetroot and cabbage); *Erysiphe pisi* (powdery mildew of pea and lucerne); *Erysiphe polyphaga* (powdery mildew of haricot bean and cucumber); *Erysiphe umbelliferarum* (powdery mildew of ombellifera, in particular of carrot); *Sphaerotheca humuli* (hop mildew); powdery mildew of wheat and barley (*Erysiphe graminis forma specie tritici* and *Erysiphe graminis forma specie hordei*),
    - of the genus *Taphrina*, for example *Taphrina deformans* (peach leaf curl),
    - of the genus *Septoria,* for example *Septoria nodorum* or *Septoria tritici* (Septoria disease of cereals),
    - of the genus *Sclerotinia,* for example *Sclerotinia sclerotinium*,
    - of the genus *Pseudocercosporella,* for example *P. herpotrichoides* (eyespot of cereals),
    - of the genus *Botrytis cinerea* (grapevine, vegetable and market garden crops, pea and the like),
    - of the genus *Phomopsis viticola* (excoriosis of grapevine),
    - of the genus *Pyrenospora*,

- of the genus *Helminthosporium*, for example *Helminthosporium tritici repentis* (yellow leaf spot of wheat) or *Helminthosporium teres* (yellow leaf spot of barley),
- of the genus *Drechslera* or *Pyrenophora,*

- of the group of basidiomycetes :

  - of the genus *Puccinia,* for example *Puccinia recondita* or *striiformis* (wheat rust), *Puccinia trificina, Puccinia hordei,*
  - of the family *Rhizoctonia* spp, for example *Rhizoctonia solani*.

The fungicide composition or combination herein defined may also have a biocide action against bacteria and viruses, such as for example:

- fire blight, *Erwinia amylovora;*
- bacterial streak of stone fruit trees, *Xanthomonas campestris*;
- pear blossom blight, *Pseudomonas syringae*;
- bacteriosis of rice and cereals;
- the viruses present on rice, vegetable and cereal crops.

The crops envisaged in the context of the present invention may be cereal crops (wheat, barley, maize, rice) and vegetable crops (haricot bean, onion, cucurbitaceae, cabbage, potato, tomato, sweet pepper, cabbage, pea, lettuce, celery, chicory), fruit crops (strawberry plants, raspberry plants), tree crops (apple trees, pear trees, cherry trees, ginseng, lemon trees, coconut palms, pecan trees, cacao trees, walnut trees, rubber trees, olive trees, poplars, banana trees), grapevine, sunflower, beetroot, tobacco and ornamental crops. Grapevines and vegetables are preferred.

A classification based on the target crops may be illustrated as below:

- grapevine: powdery mildew (*Uncinula necator*), downy mildew (*Plasmopara viticola*), grey mould (*Botrytis cinerea*), excoriosis (*Phomopsis viticola*) and black rot (*Guignardia bidwelli*),
- Solanaceae: blight (*Phytophthora infestans*), alternaria disease (*Alternaria solani*) and grey mould (*Botrytis cinerea*),
- vegetable crops: downy mildew (*Peronospora* sp., *Bremia lactucae, Pseudoperonospora* sp), alternaria (*Alternaria* sp.), sclerotinia disease (*Sclerotinia* sp.), grey mould (*Botrytis cinerea*), foot or root rot (*Rhizoctonia* spp.), powdery mildew (*Erysiphe* sp.; *Sphaerotheca fuliginea*),
- arboriculture: scab (*Venturia inaequalis, V. pirina*), bacterial diseases (*Erwinia amylovora, Xanthomonas campestris, Pseudomonas syringae*), powdery mildew (*Podosphaera leucotricha*) and Monilia (*Monilia fructigena*),
- citrus: scab (*Elsinoe fawcetti*), melanose (*Phomopsis citri*) and *Phytophthora* sp. diseases,
- wheat, as regards controlling the following seed diseases: Fusarium diseases (*Microdochium nivale* and *Fusarium roseum*), smuts (*Tilletia caries, Tilletia controversa* or *Tilletia indica*), Septoria disease (*Septoria nodorum*),
- wheat, as regards controlling the following diseases of the aerial parts of the plant: eyespot (*Pseudocercosporella herpotrichoïdes*), take-all (*Gaeumannomyces graminis*), Fusarium disease of the foot (*F. culmorum, F. graminearum*), Rhizoctonia disease (*Rhizoctonia cerealis*), powdery mildew (*Erysiphe graminis forma specie tritici*), rusts (*Puccinia striiformis* and *Puccinia recondita*), Septoria diseases (*Septoria tritici* and *Septoria nodorum*) and yellow leaf spot of wheat (*Helminthosporium tritici-vulgaris*),
- wheat and barley, as regards controlling bacterial and viral diseases, for example barley yellow mosaic,
- barley, as regards controlling the following seed diseases: yellow leaf spot (*Pyrenophora graminea, Bipolaris, Pyrenophora teres* and *Cochliobolus sativus*), loose smut (*Ustilago nuda*) and Fusarium diseases (*Microdochium nivale* and *Fusarium roseum*),
- barley, as regards controlling the following diseases of the aerial parts of the plant: eyespot (*Pseudocercosporella herpotrichoïdes*), yellow leaf spot (*Pyrenophora teres* and *Cochliobolus sativus*), powdery mildew (*Erysiphe graminis forma specie hordei*), dwarf leaf rust (*Puccinia hordei*) and leaf blotch (*Rhynchosporium secalis*);
- potato, as regards controlling tuber diseases (in particular *Helminthosporium solani, Phoma tuberosa, Rhizoctonia solani, Fusarium solani*) and certain virus diseases (virus Y);
- cotton, as regards controlling the following diseases of young plants obtained from seeds: damping-off diseases and collar rot (*Rhizoctonia solani, Fusarium oxysporum*), black root rot (*Thielaviopsis basicola*),
- pea, as regards controlling the following seed diseases: anthracnose (*Ascochyta pisi, Mycosphaerella pinodes*), Fusarium disease (*Fusarium oxysporum*), grey mould (*Botrytis cinerea*), rust (*Uromyces pisi*),
- rape plant, as regards controlling the following seed diseases: *Phoma lingam* and *Alternaria brassicae*, grey mould (*Botrytis cinerea*), and sclerotinia disease (*Sclerotinia sclerotinium*),

- maize, as regards controlling seed diseases (*Rhizopus* sp., *Penicillium* sp., *Trichoderma* sp., *Aspergillus* sp. *and Gibberella fujikuroi*), yellow leaf spot *(Bipolaris),* Fusarium disease (*Fusarium oxysporum*),
- rice: foot and root rot (*Rhizoctonia* spp.),
- flax, as regards controlling seed disease (*Alternaria linicola*),
- banana: Cercospora disease (*Mycosphaerella figiensis*),
- turf: rust, powdery mildew, yellow leaf spot, terruric diseases (*Microdochium nivale, Pythium* sp., *Rhizoctonia solani, Sclerotinia homeocarpa*),
- forest trees, as regards controlling damping-off (*Fusarium oxysporum, Rhizoctonia solani*).

The expression "are applied to the plants to be treated" is understood to mean, for the purposes of the present invention, that the fungicide composition which is the subject of the invention may be applied by means of various methods of treatment such as:

- spraying onto the aerial parts of the said plants a liquid comprising one of the said compositions,
- dusting, the incorporation into the soil of granules or powders, spraying, around the said plants, and in the case of trees injection or daubing,
- coating or film-coating the seeds of the said plants with the aid of a plant-protection mixture comprising one of the said compositions.

Spraying a liquid onto the aerial parts of the crops to be treated is the preferred method of treatment.
The subject of the present invention is also a product comprising a compound (A) and a compound (B) as a combined preparation for simultaneous, separate or sequential use in controlling the phytopathogenic fungi of crops at a site.
The fungicide composition according to the invention may be prepared immediately before use by using a kit-of-parts for controlling, curatively or preventively, the phytopathogenic fungi of crops, such a kit-of-parts may comprise at least one compound (A) and at least one compound (B) as herein defined, intended to be combined or used simultaneously, separately or sequentially in controlling the phytopathogenic fungi of crops at a site.
It is therefore a pack in which the user finds all the ingredients for preparing the fungicide formulation which they wish to apply to the crops. These ingredients, which comprise in particular the active agents (A) and (B) and which are packaged separately, are provided in the form of a powder or in the form of a liquid which is concentrated to a greater or lesser degree. The user simply has to mix in the prescribed doses and to add the quantities of liquid, for example of water, necessary to obtain a formulation which is ready to use and which can be applied to the crops.
The following examples are given purely by way of illustration of the invention without any limitation.

Test example 1: treatment of vine cuttings with a composition according to the invention

This example demonstrates a synergy for a mixture of fosetyl-Al and tolylfluanid according to the present invention on vine downy mildew (*Plasmopara viticola*) in 72 h preventive application.
Vine plants variety Chardonnay were grown in a sandy soil in plastic pots with a single plant per pot. At the age of 2 months (6 to 7 leaves developed), these plants were sprayed with the two fungicide compounds either alone or in a mixture. Fungicide compounds applied in mixtures were also applied singly at the same doses as those used in the combinations.
The fungicide compounds, either alone or in mixtures, were applied at a volume rate of 500 l water per ha.
Three ratios were studied with tolylfluanid / fosetyl-Al equal to 1/2; 1/3 and 1/4.
Tolylfluanid / fosetyl-Al mixture was prepared with fosetyl-Al in the form of water-dispersible granules (WG) at 800 g/Kg and tolylfluanid in the form of water-dispersible granules (WG) at 500g/Kg. The dose range of tolylfluanid corresponds to 1000 mg/l, 750 mg/l, 500 mg/l, 375 mg/l, 187.5 mg/l, 50 mg/l, 25 mg/l, 10 mg/l and 5 mg/l.
Three days after treatment, each plant was inoculated by spraying an aqueous suspension of sporangia of *Plasmopara viticola* obtained from contamined leaves. The concentration of sporangia was about 100,000 units per ml.
After contamination the plants were incubated for 7 days at 20°C in a saturated atmosphere.
Seven days after contamination, symptoms were evaluated in terms of the extent of the lower surface of the leaves infected, in comparison with untreated but contamined plants.
The efficacy of the treatment was calculated using the Abbott formula :

$$\text{efficacy} = (\text{untreated} - \text{treated} / \text{untreated}) \times 100$$

The concentrations of the fungicide compounds alone or in a mixture giving 90% efficacy for each component were determined based on the sigmoid curve dose / response model with their confidence intervals. The analyses of the results were carried out using the TAMMES model (Isoboles, a graphic representation of synergism in pesticides, Neth.J. Plant Path. 70 (1964): 73-80) or Colby model.

The results obtained are presented in the form of point values, corresponding to 90% control of the pathogen and placed in a TAMMES isobole diagram which comprises on the x-axis the doses of tolylfluanid expressed in mg/l and on the y-axis the doses of fosetyl-Al also in mg/l.

The calculated results corresponding to ED90 (effective doses providing 90% of disease control) for the various ratios of the mixtures that have been evaluated are presented in table 1 and table 2 corresponding to 2 independent trials. These results have been calculated on the basis of 3 repeats per factor according to the Tammes method taking into account the product efficacy for a range of ratios and for method for 90% of disease control

Table 1

| Ratio tolylfluanid : fosetyl | 1:2 | 1:3 | 1:4 | tolylfluanid alone | fosetyl-Al alone |
|---|---|---|---|---|---|
| Practical doses for 90% efficacy | 28.5 57.1 | 23.8 71.5 | 15.8 63.3 | 73.7 | 171.7 |
| Theoretical dose for 90% efficacy | 40 80 | 31.6 95 | 27.5 110 | | |

This preventive test on grapevine downy mildew shows the synergism of the fungicide compositions containing compounds A and B at the different ratio equal to 1/2 , 1/3 and 1/4 . It has been demonstrated that less amount of both compounds are necessary to control 90% of the disease compared to the theoretical doses of each compounds expected in the mixture with just additional effect .

Test example 2: treatment of vine cuttings with a composition according to the invention

This second test was conducted independently in the same conditions as for test example 1. Results presented in table 2 are based on the Tammes method again for a method for 90% of disease control.

Table 2

| Ratio tolylfluanid : fosetyl-Al | 1:2 | 1:3 | 1:4 | tolylfluanid alone | fosetyl-Al alone |
|---|---|---|---|---|---|
| Practical doses for 90% efficacy | 91 182 | 95 285 | 34.4 137.8 | 309.6 | 837.8 |
| Theoretical doses for 90% efficacy | 175 350 | 150 450 | 125 500 | | |

In this second preventive 3 days test, the fungicide compositions containing compounds A and B at the different ratio equal to 1/2 , 1/3 and 1/4 show a strong synergistic effect between the two compounds compared to the 90% of control expected in an additional effect. These results were also confirmed when data are analysed according to Colby method .

Table 3 presents the results obtained based on using the Colby method for evaluating the synergy of the mixture of fosetyl-Al and tolylfluanid according to the invention.

Table 3

| Dose tolylfluanid mg/l + Dose of fosetyl-Al mg/l | 187 750 | 25 100 | 50 150 | 25 75 | 50 100 |
|---|---|---|---|---|---|
| Practical efficacy % | | 100 | 85 | 91 | 57 | 83 |
| Theoretical efficacy % | | 99 | 0 | 84 | 0 | 74 |

**Claims**

1. A fungicide composition comprising:

    A) a phosphorous acid derivative and
    B) tolylfluanid or dichlofluanid.

2. A composition according to claim 1 wherein compound (A) is selected from fosetyl-aluminium, fosetyl-sodium and phosphorous acid and compound (B) is tolylfluanid

3. A composition according to claims 1 or 2 comprising fosetyl-Al and tolylfluanid.

4. A composition according to claims 1 to 3 wherein compounds A and B are present in a weight ratio (A/B) of $0.001 \leq A/B \leq 500$.

5. A composition according to claim 4 wherein ratio (A/B) is of $0.01 \leq A/B \leq 10$.

6. A composition according to claims 1 to 5 further comprising an additional fungicide active substance.

7. A method for controlling the phytopathogenic fungi of crops, **characterized in that** an agronomically effective and substantially non-phytotoxic quantity of a composition according to claims 1 to 6 is applied to the soil where plants grow or are capable of growing, to the leaves or the fruit of plants or to the seeds of plants.

8. A method according to claim 7 for the treatment of grapevines or vegetables.

9. A method according to claims 7 to 8 in which the quantity of fungicide composition corresponds to a dose of compound (A) and of compound (B) is from 10g/ha to 5000 g/ha.

10. A method according to claim 9 in which the dose of compound (A) and of compound (B) is from 100g/ha to 3500g/ha.

**European Patent Office**

## EUROPEAN SEARCH REPORT

Application Number

EP 04 35 6025

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E | WO 2004/047540 A (MIRENNA LUIGI ; ISAGRO SPA (IT); OSTI SAMUELE (IT); PUPPIN OSVALDO (IT) 10 June 2004 (2004-06-10) * page 1, line 13 - page 2, line 15 * * page 5, lines 8-12 * * page 14, line 5 - line 10 * * claims 1,2,10,15,17 * ----- | 1-5,7-10 | A01N59/26 A01N57/12 |
| A | FR 2 408 305 A (PHILAGRO SA) 8 June 1979 (1979-06-08) * page 1, line 20 - line 31 * ----- | 1-10 | |

TECHNICAL FIELDS SEARCHED (Int.Cl.7)

A01N

The present search report has been drawn up for all claims

| Place of search | Date of completion of the search | Examiner |
|---|---|---|
| Munich | 8 July 2004 | Molina de Alba, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 04 35 6025

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2004

| Patent document cited in search report | | Publication date | Patent family member(s) | | Publication date |
|---|---|---|---|---|---|
| WO 2004047540 | A | 10-06-2004 | WO | 2004047540 A2 | 10-06-2004 |
| FR 2408305 | A | 08-06-1979 | FR | 2408305 A1 | 08-06-1979 |
| | | | GB | 1594634 A | 05-08-1981 |
| | | | PH | 13830 A | 07-10-1980 |

EPO FORM P0459

For more details about this annex : see Official Journal of the European Patent Office, No. 12/82